# EUROPÄISCHE PATENTSCHRIFT

(11) **EP 2 186 640 B1**
(45) Veröffentlichungstag und Bekanntmachung des Hinweises auf die Patenterteilung: **15.04.2015**
(21) Anmeldenummer: 09176260.9
(22) Anmeldetag: 25.09.2002
(51) Int. Cl.: B41F 33/00, B41F 31/00, B41F 31/02

(54) **Verpackungsdruckmaschine mit eingebauter automatischer Vergleichsfunktion zwischen Druck- und Sollbild**
Packaging printing machine with built-in automatic comparison function between print and target image
Presse d'emballage dotée d'une fonction de comparaison automatique intégrée entre l'image imprimée et l'image prévue

(30) Priorität: 04.12.2001 DE 10159387
(43) Veröffentlichungstag der Anmeldung: 19.05.2010
(62) Teilanmeldung aus: 02777233.4
(73) Patentinhaber: Windmöller & Hölscher KG, 49525 Lengerich (DE)
(72) Erfinder: Pötter, Dietmar, 49492, Westerkappeln (DE); Krümpelmann, Martin, 49525, Lengerich (DE)

(56) Entgegenhaltungen:
- EP-A2- 0 364 736
- DE-A1- 2 060 000
- DE-A1- 3 007 421
- DE-A1- 4 311 132
- DE-A1- 4 436 102
- DE-A1- 10 056 248
- DE-U1- 8 417 253
- NL-A- 8 602 109
- US-A1- 2001 003 955
- US-B1- 6 178 254

## Beschreibung

Die Erfindung betrifft eine Flexo- oder Tiefdruckmaschine mit zumindest einem Farbwerk, bei der das Druckbild (7) durch die Zufuhr geeigneter Farben und Farbmengen (31-34) nach einem Sollbild eingestellt wird.

Im Verpackungsdruck kommen vor allem Tief- und Flexodruckmaschinen zum Einsatz. Bei diesen Maschinen, welche oft mit einer Vielzahl von Farbwerken ausgestattet sind, ist es mit sehr großem Aufwand verbunden, bei einem Rüstvorgang die Farben so zu mischen und mit Verdünnungsmitteln zu versehen, dass das gewünschte Druckbild zustande kommt.

Auch während eines laufenden Druckprozesses kommt es zu ungewünschten Veränderungen des Druckbildes, die durch Zuführung geeigneter Farbe korrigiert werden müssen.

Aufgrund dieser Umstände werden von Farbherstellern oder Farbmischvorrichtungen Farben hergestellt oder gemischt, welche der Druckmaschine zugeführt werden und das Druckbild korrigieren.

Parameter bei der Herstellung oder Mischung der Farbe sind unter anderem:
- Auswahl der Farben beziehungsweise Farbpigmente.
- Mischungsverhältnis verschiedener Farben beziehungsweise Farbpigmente.
- Verdünnungsgrad von Farbe beziehungsweise Farbpigmenten mit Additiven, wobei oft folgende Unterscheidung getroffen wird:
   - Zusatz von sogenannten Löse- oder Verdünnungsmitteln, welche eine niedrige Viskosität aufweisen, so dass die Viskosität der Farbe sinkt.
   - Zusatz von Bindemitteln beziehungsweise sogenanntem Verschnitt, mit dem Ziel die Konzentration der Farbpigmente in der Farbe zu senken, ohne die Viskosität der Farbe stark zu verändern.
   - Beimischung von schwarzen oder grauen Pigmenten.

Zur Bestimmung der notwendigen Farbe und Farbmenge wird das Druckbild während des Rüst- und Druckvorganges vom Maschinenbediener überwacht. Bei dieser Arbeit ist der Maschinenbediener in der Regel auf die subjektive Beurteilung des Druckbildes mit seinen Augen angewiesen. In Ausnahmefällen verwendet der Maschinenbediener tragbare Geräte, welche bestimmte, besonders kritische Bereiche des Druckbildes spektral untersuchen.
Aufgrund der Untersuchungsergebnisse werden durch die oben erwähnten Maßnahmen die spektralen Eigenschaften der Farbe, welche zur Korrektur des Druckbildes verwendet wird, in geeigneter Weise eingestellt.

Die Einstellung beziehungsweise Überwachung des Druckbildes ist aufwändig und oft mit Fehlern behaftet.
Das Dokument D6 (NL 8602109 A), welches eine Flexo- oder Tiefdruckmaschine mit allen Merkmalen im Oberbegriff des Anspruchs 1 offenbart, betrifft ein Verfahren zur Steuerung der Farbintensität einer Druckmaschine. Um die Farbintensität des Druckbildes möglichst konstant zu halten, sind Mittel vorgesehen, die die Farbintensität des Druckbildes erfassen und mit einem Standardwert vergleichen. In Abhängigkeit von diesem Vergleich wird die Viskosität der betreffenden Farbe verändert.

Daher besteht die Aufgabe der vorliegenden Erfindung darin, eine Verpackungsdruckmaschine vorzuschlagen,
welche einen schnelleren Rüstvorgang und eine kostengünstigere und genauere Überwachung des Druckbildes ermöglicht.

Die Aufgabe wird durch eine Flexo-oder Tiefdruckmaschine mit allen Merkmalen des Anspruchs 1 gelöst.

Bereits durch die Korrektur der Farbmengen mit den Vorrichtungen zum Erfassen des Druckbildes kommen große Zeiteinsparungen für den Maschinenbediener zustande, da die genaue spektrale Untersuchung des Druckbildes zur Farbeinstellung bei laufender Druckbahn erfolgen kann. Die Steuer- und Regeleinrichtung der Druckmaschine gibt die Vergleichswerte der Außenwelt über Kommunikationsmittel, wie ein Display oder eine elektronische Schnittstelle, weiter. Alternativ dazu kann die Steuer- und Regeleinrichtung die Vergleichswerte auch selbst weiterverarbeiten. Ähnlich kann man vorgehen, wenn die Verpackungsdruckmaschine mehrere Farbwerke besitzt und nach jedem Farbwerk eine solche Vorrichtung zum Erfassen des Druckbildes vorgesehen ist.
Bei der Kontrolle des Druckbildes ist es vorteilhaft, das Druckbild mit einer Vorrichtung wie einer Digitalkamera zu erfassen, welche das Druckbild bereits in digitaler Form aufnimmt und an die Steuer- und Regeleinheit weitergibt. Wenn die Steuer- und Regeleinheit die Farbmengen in der Druckmaschine beispielsweise mit einer Wiegevorrichtung überprüft, kann die Ermittlung der zur Korrektur benötigten Farbe zuverlässiger erfolgen. Alternativ dazu könnte der Farbverbrauch an der Maschine gemessen oder abgeschätzt beziehungsweise berechnet werden.
Auch die Aufzeichnung anderer physikalischer Kenngrößen der Farbe kann in diesem Zusammenhang hilfreich sein. So können die spektralen Eigenschaften der Farbe beispielsweise mit Einrichtungen zur Überprüfung ihrer Lichtabsorption oder -emission gemessen werden.
Auch bekannte Viskositätsmessverfahren können an der Maschine zum Einsatz kommen.
Wenn Kenngrößen der zur Korrektur des Druckbildes notwendigen Farbmenge direkt also beispielsweise online an eine Farbmischvorrichtung übermittelt werden, kann die Farbmischvorrichtung zeitnah reagieren. Mit Kenngrößen der notwendigen Farbmenge kann gemeint sein, dass die Steuer- und Regelvorrichtung der Druckmaschine direkt die genaue Farbmenge und Farbzusammensetzung an die Farbmischvorrichtung weiterleitet und auf diese Weise eine genaue Bestellung aufgibt.
Zur Mischung von Farben beim Verpackungsmittelhersteller könnten jedoch auch Farbmischvorrichtungen eingesetzt werden, welche Farbe mit den gewünschten Eigenschaften aus einer Vielzahl von Farb- und Farbrestbeständen mischen.
Diese Mischvorrichtungen müssten dann in die Lage versetzt werden, bereits gemischte Farbe, welche bei bereits erledigten Druckvorgängen übrig geblieben ist, zu speichern, in ihrer Zusammensetzung zu erfassen und bei der Mischung neuer Farbe wieder zu verwenden.
Auf diese Weise wären bedeutende Farbeinsparungen realisierbar. Insbesondere wenn solche Farbmischvorrichtungen in großen Verpackungsmittelfirmen zur Farbmischung für eine Vielzahl von Druckmaschinen eingesetzt werden, ist es sinnvoll, die Farbmischvorrichtung mit einer eigenen Steuer- und Regeleinheit zu versehen.
Dieser Steuer- und Regeleinheit sind dann die gespeicherten Farbmengen bekannt und die Steuer- und Regeleinheit der Druckmaschine teilt der Steuer- und Regeleinheit der Farbmischvorrichtung lediglich Kenngrößen der zur Korrektur des Druckbildes notwendigen Farbmenge - wie resultierender Farbton und Farbmenge - mit.
Die Steuer- und Regeleinheit der Farbmischvorrichtung entscheidet dann, aus welchen Farbbeständen sie die gewünschte Farbmenge zusammensetzt.

Insbesondere wenn die Farbmischvorrichtung über keine eigene Steuereinrichtung verfügt, die die oben genannten Tätigkeiten ausführen kann, ist es vorteilhaft, wenn der Steuer- und Regelvorrichtung der Druckmaschine die in der Farbmischvorrichtung gespeicherten Farbmengen und ihre Zusammensetzung bekannt sind. Unter anderem zu diesem Zweck können Druckmaschine und Farbmischvorrichtung miteinander vernetzt sein. Die Steuer- und Regelvorrichtung der Druckmaschine kann dann alle zur Farbmischung nötigen Steuersignale bereitstellen.

Neben einer engen Vernetzung der Steuer- und Regelvorgänge im Bereich des Drucks und der Farbmischung ist die direkte Vernetzung der Farbleitungssysteme vorteilhaft.
Die Aufnahme beziehungsweise Kontrolle des Druckbildes kann mit verschiedenen Vorrichtungen vorgenommen werden. Diese Vorrichtungen können so gestaltet sein, dass eine relativ gleichmäßige spektrale Empfindlichkeit über weite Bereiche der Wellenlänge elektromagnetischer Strahlung - und hier natürlich insbesondere des Bereichs des sichtbaren Lichts - aufweisen. Es ist jedoch auch möglich, lediglich engere ausgewählte Bereiche des Spektrums zu untersuchen. In der Regel werden in beiden Fällen sogenannte digitale Kameras zum Einsatz kommen, in welchen das vom Druckbild reflektierte Licht lichtempfindlichen Halbleiterelementen zugeführt wird. Häufig werden in einer solchen Vorrichtung drei verschiedene Halbleiterbausteine verwendet, welche das Maximum ihrer Lichtempfindlichkeit in verschiedenen Wellenlängenbereichen (vorzugsweise rot, gelb, blau) haben. Zur Auswertung des vom Druckbild reflektierten Lichts eignen sich jedoch auch Vorrichtungen, bei welchen Monochromatoren oder Polychromatoren das Licht spektral aufspalten und lichtempfindlichen Messsensoren wie z. B. Photomultipliern zuführen.
Bei einer Messvorrichtung der letztgenannten Art könnte das analoge Ausgangssignal der Photomultiplier beispielsweise an die Steuer- und Regelvorrichtung weitergegeben werden und erst dort einer Analog-DigitalWandlung unterzogen werden.
In jedem der geschilderten Fälle ist es vorteilhaft, wenn die Aufnahme des Druckbildes unter weitgehend gleichbleibenden Bedingungen stattfindet, so dass die Störgrößen, die insbesondere durch die Schwankungen des Umgebungslichtes eingetragen werden, minimiert werden.
Zu diesem Zweck kann die Druckbahn einen Kasten durchlaufen, der das Druckbild weitgehend vom Umgebungslicht abschirmt und der gleichzeitig die Vorrichtung zum spektralen Erfassen des Druckbildes und gegebenenfalls geeignete Lichtquellen enthält.
Eine andere Möglichkeit zum Herstellen gleichbleibender Bedingungen besteht darin, die Druckbahn am Ort der Erfassung des Druckbildes mit Licht starker Intensität zu beleuchten. Bei diesem Licht kann es sich um weißes Licht handeln. Es ist jedoch auch möglich, Lichtquellen zu verwenden, welche Licht in den Wellenlängenbereichen emittieren, die von der Messvorrichtung gemessen werden. Auch in diesen beiden Fällen würde das Verhältnis der Störgrößen zu den Messgrößen wesentlich verbessert.
In allen geschilderten Fällen ist es vorteilhaft, wenn während des Messvorganges Licht möglichst gleichbleibender Intensität verwendet wird.

Bereits bei der spektralen Beschaffenheit aufeinanderfolgender Druckbilder können Schwankungen auftreten. Dieser Umstand ist in der Regel nicht auf instantane Schwankungen der Eigenschaften der Druckfarbe, sondern auf mechanische Ungenauigkeiten - wie sogenannte Registerfehler, die insbesondere bei mehren Druckwerken auftreten - zurückzuführen. Solche Schwankungen können durch eine Durchschnittsbildung anhand mehrerer Druckbilder ausgemittelt werden.

Bei einem kompletten Rüstvorgang an einer Verpackungsdruckmaschine, der beispielsweise nach einem Klischeewechsel an einer Flexodruckmaschine notwendig wird, müssen die Positionen der am Druck- und Einfärbeprozess beteiligten Walzen erneut zueinander eingestellt werden. Auch dieser Prozess, der in Regel der Einstellung der Farbmengen und Zusammensetzungen vorausgeht, ist aufwändig.
In der nach veröffentlichten Anmeldung EP 1 666 252 A2 (entspricht der DE 101 45 957.2) wird ausführlich beschrieben, wie sich diese Einstellung effizienter handhaben lässt.
Bei der Einstellung der Walzenposition können die Druckbilder von derselben Vorrichtung zur Erfassung des Druckbildes erfasst werden, wie bei der Einstellung der Farbmenge und -zusammensetzung. Es kann auch auf die Speicher- und Rechenkapazität einer Steuer- und Recheneinheit zurückgegriffen werden. In der Regel wird die Anstellung der Druckwalzen gegeneinander der genauen Optimierung der Farbzusammensetzung vorausgehen. Insbesondere bei sich ändernden Viskositäts-, Adhäsions- oder Hafteigenschaften der Farbe während der Optimierung ihrer Zusammensetzung ist es jedoch auch denkbar, die Walzenpositionen auch während des Druckprozesses zu überprüfen. Auch die Abnutzung beispielsweise der Klischees im Druckprozess kann solche Maßnahmen erforderlich machen.

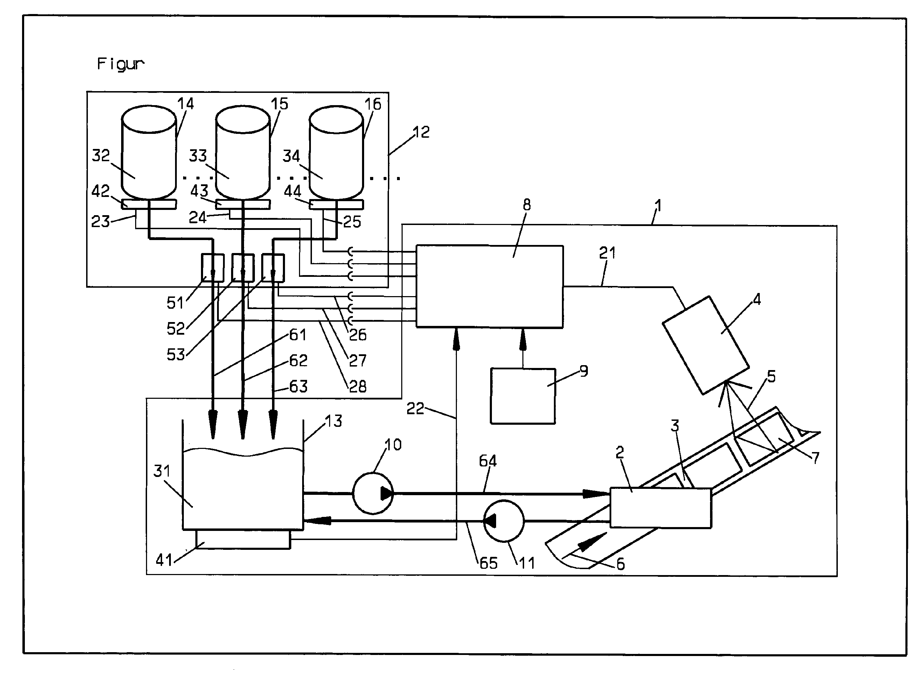

Weitere vorteilhafte Ausführungsformen und Ausführungsbeispiele der Erfindung ergeben sich aus den weiteren Ansprüchen, der gegenständlichen Beschreibung und der Zeichnung.

Die Figur zeigt einen schematischen Aufbau eines Ausführungsbeispiels der Erfindung, wobei nur ein Druckwerk dargestellt ist.

Die Figur zeigt ein Schema einer Flexo- oder Tiefdruckmaschine 1, welche vorzugsweise im Verpackungsdruck eingesetzt wird. Das Farbwerk 2 der Druckmaschine 1 bedruckt die Materialbahn 3, bei welcher es sich um eine Kunststoff- oder Papierbahn handeln kann. Die Materialbahn durchläuft die Druckmaschine 1 in Richtung des Pfeils 6, so dass sie nach dem Druckprozess im Farbwerk 2 an dem Spektralsensor 4 vorbeiläuft. Das von dem Druckbild 7 auf der Bahn 3 reflektierte Licht wird durch den Lichtkegel 5 dargestellt.
Die Ausgangssignale des Spektralsensors 4 werden über die Datenleitung 21 dem Rechner 8 zugeführt. In dem Rechner ist die digitalisierte Sollform des Druckbildes abgelegt. Das Ablegen dieser Sollform kann durchgeführt werden, indem das Muster 9 extern oder durch eine geeignete Vorrichtung der Druckmaschine 1 spektral untersucht und der Steuer- und Regeleinheit 8 zugeführt wird. In Zukunft werden immer mehr Muster vor Beginn des Druckprozesses lediglich in digitaler Form vorhanden sein und beispielsweise per E-Mail von dem Auftraggeber des Verpackungsmittelherstellers übermittelt. In der Rechen- und Steuereinheit wird das Sollbild mit den Messwerten des Spektralsensors verglichen. Um die zur Korrektur des Druckbildes 7 notwendige Farbmenge zur ermitteln, fragt die Steuer- und Regeleinheit 8 die in der Druckmaschine noch vorhandene Farbmenge von der Waage 10 der Druckmaschine 1 über die Datenleitung 22 ab.
Die Zusammensetzung der im Farbbehälter 13 enthaltenen Farbe 31 ist der Steuer- und Recheneinheit 8 bekannt, da in der Steuer- und Recheneinheit auch alle früheren Farbeinträge in den Farbbehälter 11 gespeichert wurden. Die Steuer- und Messvorrichtung 8 fragt auch die Menge der in den Farbbehältern 14 bis 16 enthaltenen Farbe 32 bis 34 ab. Im dargestellten Ausführungsbeispiel wird die Farbmenge in der Farbmischvorrichtung 12 von Waagen oder Füllstandsmessern 42 bis 44 aufgezeichnet und über die Datenleitungen 23 bis 25 übertragen.
In der Praxis können Farbmischvorrichtungen über wesentlich mehr Farbbehälter verfügen. Dieser Umstand ist durch die Punkte zwischen den Farbbehältern 14 bis 16 angedeutet.
Auf der Basis aller gewonnen Messwerte errechnet die Steuer- und Regeleinheit 8 die Menge und Zusammensetzung der zur Korrektur des Druckbildes benötigten Farbmenge und steuert die Ventile 51 bis 53 der Farbleitungen 61 bis 63 dementsprechend an. Die Farbe gelangt in den Farbbehälter 13 der Druckmaschine 1, vermischt sich mit der Restfarbe 31 und wird schließlich von der Pumpe 10 über die Farbleitung 64 dem Farbwerk 2 zugeführt. Nun wird ein korrigiertes Druckbild 7 auf die Materialbahn 3 gedruckt. Zu erwähnen ist noch die Farbrückführungsleitung 65, durch welche von der Pumpe 11 Farbe aus dem Farbwerk in den Farbbehälter 13 zurückgepumpt wird.

| **Bezugszeichenliste** | |
|---|---|
| 1 | Flexo- oder Tiefdruckmaschine |
| 2 | Farbwerk |
| 3 | Materialbahn |
| 4 | Spektralsensor |
| 5 | Lichtkegel |
| 6 | Pfeil |
| 7 | Druckbild |
| 8 | Steuer- und Regeleinheit/Rechner |
| 9 | Muster |
| 10 | Pumpe (Vorlauf) |
| 11 | Pumpe (Rücklauf) |
| 12 | Farbmischvorrichtung |
| 13 | Farbbehälter der Druckmaschine |
| 14 | Farbbehälter der Farbmischvorrichtung |
| 15 | Farbbehälter der Farbmischvorrichtung |
| 16 | Farbbehälter der Farbmischvorrichtung |
| | |
| 21-28 | Datenleitung |
| | |
| 31-34 | Farbe |
| | |
| 41-44 | Waage bzw. Füllstandsmesser |
| | |
| 51-53 | Ventile |
| | |
| 61-65 | Farbleitungen |

## Patentansprüche

1. Flexo- oder Tiefdruckmaschine zum Bedrucken einer Bedruckstoffbahn,
mit zumindest einem Farbwerk,
mit einem Erfassungsmittel, welches ein auf die Bedruckstoffbahn durch das Farbwerk gedrucktes Druckbild erfasst,
mit einer Steuer- und Regeleinheit, welche einen Vergleich zwischen einer digitalisierten Sollform des Druckbildes, welche in der Steuer- und Regeleinheit abgelegt ist, und dem durch das Erfassungsmittel erfassten Druckbild durchführt und daraus Vergleichswerte erzeugt,
mit Mitteln zur Weitergabe oder Weiterverwertung der Vergleichswerte, und
mit Mitteln zum Errechnen einer zur Korrektur des Druckbildes notwendigen Farbmenge und Farbzusammensetzung, welche der Steuer- und Regeleinheit zugeordnet sind,
**dadurch gekennzeichnet,**
**dass** in Abhängigkeit von dem Ausgangssignal des Erfassungsmittels auch die Relativposition von am Druck- und Einfärbeprozess betelligten Walzen während des Druckprozesses einstellbar oder überprüfbar ist.

2. Flexo- oder Tiefdruckmaschine nach Anspruch 1, **dadurch gekennzeichnet, dass** das Erfassungsmittel das Druckbild in digitaler Form an die Regel- und Steuereinheit weiterleitet.

3. Flexo- oder Tiefdruckmaschine nach einem der Ansprüche 1 - 2, **dadurch gekennzeichnet, dass** Vorrichtungen vorgesehen sind, welche Farbvolumen oder Farbmasse feststellen und der Steuer- und Regeleinheit melden.

4. Flexo- oder Tiefdruckmaschine nach einem der Ansprüche 1 - 3, **dadurch gekennzeichnet, dass** Vorrichtungen vorgesehen sind, welche physikalische Kenngrößen der Farbe, wie ihre spektrale Zusammensetzung oder ihre Viskosität, feststellen und der Steuer- und Regeleinheit melden.

5. Flexo- oder Tiefdruckmaschine nach einem der Ansprüche 1 - 4, **dadurch gekennzeichnet, dass** Kommunikationsmittel vorgesehen sind zum direkten Übertragen einer zur Korrektur des Druckbildes notwendigen Farbmenge und Farbzusammensetzung an eine Farbmischvorrichtung.

6. Flexo- oder Tiefdruckmaschine nach Anspruch 5, **dadurch gekennzeichnet, dass** in der Steuer- und Regeleinrichtung die in der Farbmischvorrichtung vorhandenen Farbmengen abgespeichert sind, wobei diese Farbmengen bei der Berechnung einer zur Korrektur des Druckbildes notwendigen Farbmenge berücksichtigt werden.

7. Flexo- oder Tiefdruckmaschine nach einem der Ansprüche 1 - 6, **dadurch gekennzeichnet, dass** zumindest eine unmittelbare Verbindung zur Überleitung von Farbe von einer Farbmischvorrichtung zu geeigneten Reservoirs der Flexo- oder Tiefdruckmaschine vorgesehen ist.

8. Flexo- oder Tiefdruckmaschine nach einem der Ansprüche 1 - 7, **dadurch gekennzeichnet, dass** das Erfassungsmittel in Form eines Erfassungssensors unterschiedliche Bereiche des Spektrums des vom Druckbild reflektierten Lichts erfasst.

9. Flexo- oder Tiefdruckmaschine nach einem der Ansprüche 1 - 8, **dadurch gekennzeichnet, dass** das Erfassungsmittel in Form eines Erfassungssensors das Druckbild unter gleichbleibenden Bedingungen erfasst.

10. Flexo- oder Tiefdruckmaschine nach einem der Ansprüche 1 - 9, **dadurch gekennzeichnet, dass** das Erfassungsmittel in Form eines Erfassungssensors derart angeordnet ist, dass das Druckbild nach dem Durchlaufen sämtlicher Farbwerke der Flexo- oder Tiefdruckmaschine aufgezeichnet wird.

11. Flexo- oder Tiefdruckmaschine nach einem der Ansprüche 1 - 10, **dadurch gekennzeichnet, dass** die Steuer- und Regeleinrichtung einen aus mehreren Druckbildern gebildeten Durchschnittswert mit der digitalisierten Sollform des Druckbildes vergleicht.

## Claims

1. Flexographic or gravure printing machine for printing onto a web of printed material,
with at least one inking unit,
with a detecting means, which detects a printed image printed onto the web of printed material by the inking unit,
with an open-loop and closed-loop control unit, which carries out a comparison between a digitized target form of the printed image that is stored in the open-loop and closed-loop control unit and the printed image detected by the detecting means and from it generates comparison values,
with means for passing on or further utilizing the comparison values, and
with means for calculating a quantity of ink and composition of ink necessary for the correction of the printed image, which are assigned to the open-loop and closed-loop control unit,
**characterized**
**in that** the relative position of rollers involved in the printing and inking process can also be set or verified during the printing process in dependence on the output signal of the detecting means.

2. Flexographic or gravure printing machine according to Claim 1, **characterized in that** the detecting means passes on the printed image in digital form to the open-loop and closed-loop control unit.

3. Flexographic or gravure printing machine according to either of Claims 1 and 2, **characterized in that** devices that determine the volume of ink or mass of ink and indicate it to the open-loop and closed-loop control unit are provided.

4. Flexographic or gravure printing machine according to one of Claims 1-3, **characterized in that** devices that determine physical characteristics of the ink, such as its spectral composition or its viscosity, and indicate them to the open-loop and closed-loop control unit are provided.

5. Flexographic or gravure printing machine according to one of Claims 1-4, **characterized in that** communication means are provided for directly transferring a quantity of ink and composition of ink necessary for the correction of the printed image to an ink mixing device.

6. Flexographic or gravure printing machine according to Claim 5, **characterized in that** the quantities of ink that are present in the ink mixing device are stored in the open-loop and closed-loop control device, these quantities of ink being taken into account in the calculation of a quantity of ink necessary for the correction of the printed image.

7. Flexographic or gravure printing machine according to one of Claims 1-6, **characterized in that** at least one direct connection is provided for conducting ink from an ink mixing device to suitable reservoirs of the flexographic or gravure printing machine.

8. Flexographic or gravure printing machine according to one of Claims 1-7, **characterized in that** the detecting means in the form of a detecting sensor detects different regions of the spectrum of the light reflected by the printed image.

9. Flexographic or gravure printing machine according to one of Claims 1-8, **characterized in that** the detecting means in the form of a detecting sensor detects the printed image under unchanging conditions.

10. Flexographic or gravure printing machine according to one of Claims 1-9, **characterized in that** the detecting means in the form of a detecting sensor is arranged in such a way that the printed image is recorded after passing through all of the inking units of the flexographic or gravure printing machine.

11. Flexographic or gravure printing machine according to one of Claims 1-10, **characterized in that** the open-loop and closed-loop control device compares an average value formed from a number of printed images with the digitized target form of the printed image.

## Revendications

1. Machine d'impression flexographique ou en creux, pour l'impression d'une bande de matériau à imprimer,
avec au moins un dispositif d'encrage,
avec un moyen de détection qui détecte une image d'impression imprimée par le dispositif d'encrage sur la bande de matériau à imprimer,
avec une unité de commande et de régulation qui effectue une comparaison entre une forme de consigne numérisée de l'image d'impression qui est consignée dans l'unité de commande et de régulation et l'image d'impression détectée par le moyen de détection et qui produit à partir de ladite comparaison des valeurs comparatives,
avec des moyens pour restituer ou recycler les valeurs comparatives, et
avec des moyens pour calculer une quantité d'encre et une composition d'encre nécessaires pour corriger l'image d'impression, qui sont associés à l'unité de commande et de régulation,
**caractérisée en ce que**
la position relative de rouleaux participant au processus d'impression et d'encrage peut également être ajustée ou contrôlée pendant le processus d'impression en fonction du signal de sortie du moyen de détection.

2. Machine d'impression flexographique ou en creux selon la revendication 1, **caractérisée en ce que** le moyen de détection transmet l'image d'impression sous forme numérique à l'unité de commande et de régulation.

3. Machine d'impression flexographique ou en creux selon l'une quelconque des revendications 1 à 2, **caractérisée en ce que** des dispositifs sont prévus, lesquels établissent le volume d'encre ou la masse d'encre et les communiquent à l'unité de commande et de régulation.

4. Machine d'impression flexographique ou en creux selon l'une quelconque des revendications 1 à 3, **caractérisée en ce que** des dispositifs sont prévus, lesquels établissent des grandeurs caractéristiques physiques de l'encre, comme sa composition spectrale ou sa viscosité, et les communiquent à l'unité de commande et de régulation.

5. Machine d'impression flexographique ou en creux selon l'une quelconque des revendications 1 à 4, **caractérisée en ce que** des moyens de communication sont prévus pour transmettre directement à un dispositif de mélange d'encre une quantité d'encre et une composition d'encre nécessaires pour corriger l'image d'impression.

6. Machine d'impression flexographique ou en creux selon la revendication 5, **caractérisée en ce que** les quantités d'encre prévues dans le dispositif de mélange d'encre sont mémorisées dans l'unité de commande et de régulation, ces quantités d'encre étant prises en compte lors du calcul d'une quantité d'encre nécessaire pour corriger l'image d'impression.

7. Machine d'impression flexographique ou en creux selon l'une quelconque des revendications 1 à 6, **caractérisée en ce qu'**il est prévu au moins une connexion directe pour la transmission d'encre depuis un dispositif de mélange d'encre à des réservoirs appropriés de la machine d'impression flexographique ou en creux.

8. Machine d'impression flexographique ou en creux selon l'une quelconque des revendications 1 à 7, **caractérisée en ce que** le moyen de détection sous forme d'un capteur de détection détecte différentes régions du spectre de la lumière réfléchie par l'image d'impression.

9. Machine d'impression flexographique ou en creux selon l'une quelconque des revendications 1 à 8, **caractérisée en ce que** le moyen de détection sous forme d'un capteur de détection détecte l'image d'impression dans des conditions constantes.

10. Machine d'impression flexographique ou en creux selon l'une quelconque des revendications 1 à 9, **caractérisée en ce que** le moyen de détection sous forme d'un capteur de détection est disposé de telle sorte que l'image d'impression soit enregistrée après le passage par tous les dispositifs d'encrage de la machine d'impression flexographique ou en creux.

11. Machine d'impression flexographique ou en creux selon l'une quelconque des revendications 1 à 10, **caractérisée en ce que** l'unité de commande et de régulation compare une valeur moyenne formée à partir de plusieurs images d'impression avec la forme de consigne numérisée de l'image d'impression.
